# EUROPEAN PATENT APPLICATION

(11) **EP 4 556 739 A1**
(43) Date of publication of application: **21.05.2025**
(21) Application number: 24209231.0
(22) Date of filing: 28.10.2024
(51) Int. Cl.: F16D 55/40, F16D 59/02, F16D 65/54, F16D 65/18, F16D 121/02, F16D 121/04, F16D 123/00

(54) **BRAKING ASSEMBLY FOR A WORK VEHICLE**

(30) Priority: 30.10.2023 IT 202300022752
(71) Applicant: CNH Industrial Italia S.p.A., 10156 Torino (IT)
(72) Inventor: Pellizzari, Piero, 10156 Turin (IT); Forte, Michelantonio, 10156 Turin (IT)
(74) Representative: CNH Industrial IP Department

(57) **Abstract**

Braking assembly (10; 10'; 10'; 10^{III}; 10^{IV}') for a work vehicle (1; 1'; 1"; 1^{III}; 1^{IV}) comprising a first brake disc (8, 7), which is adapted to rotate integrally with at least one wheel of work vehicle (1; 1'; 1"; 1^{III}; 1^{IV}) about a rotational axis (A) ; a first brake piston (53; 53'; 53"; 1^{III}; 1^{IV}), which is adapted to at least indirectly cooperate with first brake disc (8, 7). The braking assembly (10; 10'; 10"; 10^{III}; 10^{IV}) further comprises a second brake piston (54; 54'; 54''; 54^{III}; 54^{IV}), which is adapted to at least indirectly cooperate with first brake disc (8, 7); first elastic means (55; 55^{III}), which are adapted to elastically urge the second brake piston (54; 54'; 54''; 54^{III}; 54^{IV}) to cooperate with the first brake disc (8, 7) ; a support element (56; 56'; 56‴; 56^{III}; 56^{IV}), which is fixed to a main body (2) of the work vehicle (1; 1'; 1''; 1^{III}; 1^{IV}) and which is adapted to slidably support the second brake piston (54; 54'; 54''; 54^{III}; 54^{IV}); and at least one clearance recovery device (70; 70'; 70^{IV}), which is supported by the support element (56; 56'; 56"; 56^{III}; 56^{IV}) and adapted to limit the stroke of the first brake piston (53; 53'; 53"; 53^{III}; 53^{IV}) from the second configuration to the first configuration.

## Description

### TECHNICAL FIELD

The present invention concerns a braking assembly for a work vehicle, preferably an agricultural vehicle, such as a tractor. The present invention also relates to a work vehicle comprising such a braking assembly.

### BACKGROUND OF THE INVENTION

Agricultural vehicles are known comprising a main body and plurality of wheels adapted to rotate about respective rotational axes so as move the main body with respect to the ground.

The agricultural vehicles further comprise a service braking system, which is adapted to slow down, stop or prevent the rotation of the wheels about their respective rotational axes while the vehicles are moving, and a parking and/or emergency braking system, which is specifically adapted to keep the vehicles securely motionless when parked or in emergency conditions.

As is well known, various braking technologies have been developed over time and, in particular, some agricultural vehicles usually employ one or more disc brakes as service brakes and one or more SAHR (Spring Activated Hydraulic Release) brakes as parking brakes.

The disc brakes generally comprise at least one brake disc, which is rotatable integrally with one or more wheels, and brake pads, which are adapted to be pressed against the brake disc in order to generate friction and, consequently, a braking action.

The SAHR brake generally comprises a friction member, which is spring biased against an abutment element. A hydraulic circuit of the work vehicle is adapted to oppose the biasing of the friction member during the vehicle movement to disengage the friction member. In detail, the SAHR brake is arranged upstream the bevel set gear of the work vehicle.

The arrangement of the disc brakes and the SAHR brake in the know work vehicles is cumbersome and severely limits the space available in the vehicle and the design freedom. Therefore, the need is felt to reduce the volume occupied by components used for vehicle braking; in particular, it is necessary to ensure that wear of the components of the brakes does not affect the braking of the work vehicle.

An aim of the present invention is to satisfy the above mentioned need in a cost-effective and optimized manner.

### SUMMARY OF THE INVENTION

The aforementioned aim is reached by a braking assembly, as claimed in the appended independent claim.

Preferred embodiments of the invention are realized according to the claims dependent or related to the above independent claim.

### BRIEF DESCRIPTION OF DRAWINGS

For a better understanding of the present invention, five preferred embodiments are described in the following, by way of non-limiting examples, with reference to the attached drawings wherein:
- Figure 1 is a cross-section of a braking assembly of an agricultural vehicle according to a first embodiment of the present invention showing a clearance recovering device;
- Figure 2 is a cutaway perspective view of the braking assembly of Figure 1;
- Figure 3 is a further cross-section of the braking assembly of Figures 1 and 2;
- Figure 4 is a cross-section of a braking assembly of an agricultural vehicle according to a second embodiment of the present invention showing a clearance recovery device;
- Figures 4A, 4B, 4C and 4D are detailed views of the clearance recovery device of Figure 4 in respective different operative conditions;
- Figures 5 is a cross-section of a braking assembly of an agricultural vehicle according to a third embodiment of the present invention;
- Figure 6 is a cutaway perspective view of the braking assembly of Figure 5;
- Figures 7 is a cross-section of a braking assembly of an agricultural vehicle according to a fourth embodiment of the present invention;
- Figure 8 is a cutaway perspective view of the braking assembly of Figure 7; and
- Figures 9 is a cross-section of a braking assembly of an agricultural vehicle according to a fifth embodiment of the present invention.

### DETAILED DESCRIPTION OF THE INVENTION

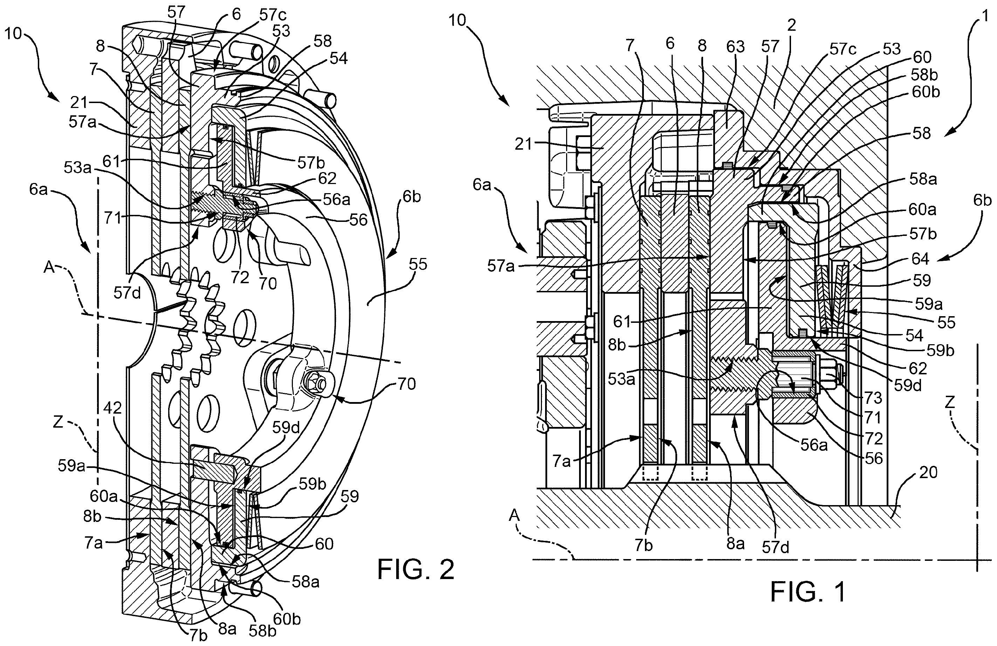

With reference to Figure 1, numeral 1 indicates a work vehicle, which is only partially sketched, in particular an agricultural vehicle such as a tractor. Vehicle 1 comprises a main body 2 and a plurality of not-shown wheels, which are rotatable about respective rotational axes A so as to move main body 2 with respect to the ground.

Work vehicle 1 comprises two front wheels and two rear wheels according to a longitudinal advancement direction of vehicle 1. In detail, the two rear wheels are mounted on a respective axle 20 of work vehicle 1, are rotatable about coincident rotational axes A and are spaced from each other along the rotational axes A. In further detail, vehicle 1 comprises two braking assemblies 10, which are adapted to brake a respective rear wheel.

For the sake of simplicity, in the following of the present description reference will be made to a single braking assembly 10 adapted to brake one of the two rear wheels, the description of a braking assembly 10 adapted to brake the other rear wheel being identical.

As illustrated in Figure 1, braking assembly 10 comprises two brake discs 7 and 8, which are rotatable integrally with the rear wheel about rotational axis A and spaced from each other parallel to rotational axis A.

Brake discs 7 and 8 are arranged coaxially to each other and to rotational axis A (Figures 1 and 2). In addition, preferably, brake discs 7 and 8 are identical to each other.

Brake assembly 10 further comprises an intermediate disc 6, which is rotationally fixed (i.e., not rotatable with respect to main body 2), and which is interposed between brake discs 7 and 8 parallel to rotational axis A.

Preferably, braking assembly 10 also comprises at least one not-shown anti-rotational device of intermediate disc 6, which is adapted to prevent the rotation of intermediate disc 6 about rotational axis A relative to main body 2. In detail, the anti-rotational device comprises a pin, which is fixed to both intermediate disc 6 and main body 2. Preferably, braking assembly 10 comprises three anti-rotational devices of intermediate disc 6, which are spaced from one another by 120° circumferentially with respect to rotational axis A.

Intermediate disc 6 defines a first side 6a and a second side 6b, which are opposite to each other, in particular with respect to a median plane of intermediate disc 6. More specifically, intermediate disc 6 is arranged coaxially to rotational axis A and the rear wheel, which is braked by the braking assembly 10, is arranged on second side 6b with respect to intermediate disc 6. Preferably, intermediate disc 6 is shaped like an annulus. In addition, brake disc 7 is arranged on first side 6a and brake disc 8 is arranged on second side 6b.

Brake discs 7, 8 comprise respective faces 7b, 8b, which are respectively adapted to face intermediate disc 6 and respective faces 7a, 8a respectively opposite to faces 7b, 8b with respect to respective median planes of brake discs 7 and 8.

In the embodiment shown, brake disc 7 comprises a friction material at an external surface thereof, in detail at face 7b; brake disc 8 comprises a friction material at an external surface thereof, in detail at face 8b.

It is further possible to define a direction Z, which is orthogonal to rotational axis A. Direction Z is vertical to the ground on which the wheels rest during operation.

Brake discs 7 and 8 and intermediate disc 6 are slidable parallel to rotational axis A with respect to main body 2. Braking assembly 10 further comprises a reaction support 21, which is arranged opposite to intermediate disc 6 with respect to brake disc 7.

Reaction support 21 is fixed with respect to main body 2. Accordingly, reaction support 21 is rotationally fixed and cannot slide parallel to rotational axis A. Preferably, reaction support 21 is shaped like as an annulus and is arranged coaxially to rotational axis A.

Braking assembly 10 further comprises a piston 53, which is adapted to press brake disc 8, intermediate disc 6 and brake disc 7 against reaction support 21, in order to obtain a braking action of the rear wheel.

In detail, piston 53 may be set to a first configuration, in which it presses brake disc 8 or to a second configuration, in which it does not press brake disc 8 and is spaced therefrom.

Work vehicle 1 comprises a hydraulic system 90 for the actuation of piston 53, which will be described in detail below. Piston 53 may be actuated by a driver of vehicle 1. In detail, piston 53 is actuated by a brake command oil pressure, which is generated with a master cylinder pump or a hydraulic valve or any other alternative hydraulic oil pressure source inside a vehicle cabin, for example by means of a pedal.

Piston 53 is opposite to intermediate disc 6 with respect to brake disc 8 parallel to rotational axis, is rotationally fixed and arranged coaxially to rotational axis A and axle 20.

Piston 53 is slidable parallel to rotational axis A. In detail, piston 53 is adapted to abut brake disc 8 on the side of face 8a and to slide brake discs 8, 7 and intermediate disc 6 towards reaction support 21. In detail, piston 53 is a service brake piston.

In detail, piston 53 comprises an annular shaped body 57 and a protrusion 58 extending from annular shaped body 57 parallel to rotational axis A. Protrusion 58 extends from annular shaped body 57 on the side opposite to brake disc 8 and preferably over the entire circumference of annular shaped body 57.

Annular shaped body 57 comprises a face 57a adapted to directly contact brake disc 8 and a face 57b, which is opposite to face 57a with respect to a median plane of piston 53 along rotational axis A. Preferably, faces 57a and 57b are planar or substantially planar and directed orthogonally to rotational axis A.

Annular shaped body 57 further comprises a radially outer surface 57c and a radially inner surface 57d with respect to rotational axis A. In the embodiment shown, radially outer surface 57c and radially inner surface 57d are cylindrical and concentrical to rotational axis A.

Protrusion 58 comprises a radially inner surface 58a and a radially outer surface 58b with respect to rotational axis A. In the embodiment shown, radially inner surface 58a and radially outer surface 58b are cylindrical and concentrical to rotational axis A.

More specifically, radially inner surface 58a is interposed between radially outer surface 58b and radially inner surface 57d radially with respect to rotational axis A. In addition, radially outer surface 58b is radially closer to rotational axis A than radially outer surface 57c.

Furthermore, piston 53 comprises three holes 53a. Holes 53a are through holes and are arranged at annular shaped body 57. In detail, holes 53a are cylindrical holes directed parallel to rotational axis A and are at least in part threaded. In the embodiment shown, holes 53a are spaced from one another by 120° circumferentially with respect to rotational axis A. In further detail, holes 53a are radially interposed between radially inner surface 58a and radially inner surface 57d.

Advantageously, braking assembly 10 comprises a further brake piston 54, which is adapted to at least indirectly cooperate with brake disc 8 and a spring 55, which is adapted to elastically pre-load piston 54 to cooperate with brake disc 8.

Piston 54 is actuated independently of piston 53. In detail, work vehicle 1 comprises a hydraulic system 91 for the actuation of piston 54, which will be described in detail below. Hydraulic system 91 is adapted to counteract the spring force exerted on piston 54 by spring 55 in order to release brake disc 8. Accordingly, piston 54, spring 55 and hydraulic system 91 define a SAHR brake of work vehicle 1.

The release of piston 54 is commanded by the driver, by way of example inside the vehicle cabin with an operating means, such as a lever.

In detail, piston 54 is opposed to brake disc 8 with respect to piston 53 along rotational axis A. In addition, piston 54 is adapted to cooperate with brake disc 8 through brake piston 53. In other words, piston 54 is adapted to exert its braking action on brake disc 8 by means of piston 53 and piston 54 is not adapted to directly contact brake disc 8.

Piston 54 comprises an annular shaped body 59 and a protrusion 60 extending from annular shaped body 59 parallel to rotational axis A. In detail, protrusion 60 extends from annular shaped body 59 towards piston 53, preferably along the entire circumference of annular shaped body 59.

Annular shaped body 59 comprises a face 59a, which is oriented towards piston 53 and a face 59b, which is opposite to face 59a with respect to a median plane of piston 54 along rotational axis A. Preferably, faces 59a and 59b are planar or substantially planar and directed orthogonally to rotational axis A.

Annular shaped body 59 further comprises a radially inner surface 59d with respect to rotational axis A. In the embodiment shown, radially inner surface 59d is cylindrical and concentrical to rotational axis A.

Protrusion 60 comprises a radially inner surface 60a and a radially outer surface 60b with respect to rotational axis A. In the embodiment shown, radially inner surface 60a and radially outer surface 60b are cylindrical and concentrical to rotational axis A.

In other words, a cross-section of piston 54 in a plane passing through rotational axis A is U-shaped.

As shown in Figures 1 and 2, protrusion 60 is adapted to contact piston 53 at face 57b. Moreover, radially outer surface 60b is adapted to face radially inner surface 58a and/or to slidably contact radially inner surface 58a.

Braking assembly 10 further comprises a support element 56, which is fixed to main body 2 and is adapted to slidably support brake piston 54 with respect to main body 2.

Support element 56 comprises an annular shaped body 61 and a protrusion 62 extending from annular shaped body 61 parallel to rotational axis A. In detail, protrusion 62 extends from annular shaped body 61 on the side opposite to brake disc 8 and preferably over the entire circumference of annular shaped body 61.

In detail, annular shaped body 61 is spaced apart from piston 53 along rotational axis A. In addition, annular shaped body 61 is arranged radially inside (i.e., radially closer to rotational axis A) with respect to radially inner surface 60a with respect to rotational axis A; protrusion 62 is arranged radially inside with respect to radially inner surface 59d.

Support element 56 further comprises three holes 56a. Holes 56a are through holes and are each aligned to a respective hole 53a parallel to rotational axis A. In detail, holes 56a are cylindrical holes directed parallel to rotational axis A. In the embodiment shown, holes 56a are spaced from one another by 120° circumferentially with respect to rotational axis A.

Spring 55 is arranged on the side of brake piston 54 opposite to brake disc 8 along rotational axis A. In detail, spring 55 is adapted to exert its elastic force onto face 59b. In the embodiment shown, spring 55 is a Belleville spring.

Braking assembly 10 also comprise a body 63, which is in contact with main body 2 and fixed thereto (Figure 1). Body 63 is arranged radially externally to piston 53 and comprises a stretch 64, which is directed orthogonally to rotational axis A. In detail, spring 55 is in contact with stretch 64 on the side opposite to piston 54.

According to a not-shown embodiment, body 63 is integrated with main body 2.

Braking assembly 10 further comprises three clearance recovery devices 70, which are adapted to limit the stroke of brake piston 53 from the second configuration to the first configuration parallel to rotational axis A. In detail, clearance recovery devices 70 are adapted to limit the stroke of brake piston 53 specifically when brake discs 7 and/or 8 are worn.

In the following of the present description, only one clearance recovery device 70 will be described, being all clearance recovery devices 70 identical to one another.

Clearance recovery device 70 comprises:
- a pin 71, which is integral with piston 53 and slidably engaged in a hole 56a; and
- elastic means 72, which are adapted to cooperate with both pin 71 and hole 56a.

In detail, pin 71 is in part engaged in a respective hole 53a and in part engaged in the hole 56a aligned with the respective hole 53a.

In addition, elastic means 72 comprise an elastic bushing, which is arranged within hole 56a. In further detail, each elastic bushing is arranged in the room radially interposed between pin 71 and the surface of hole 56a and is in contact with the surface of hole 56a. More specifically, the surface of hole 56a exerts a frictional force on the coil spring.

Clearance recovery device 70 further comprises a nut 73, which is screwed onto pin 71 at the axial end of pin 71 opposite to piston 53. Nut 73 is adapted to limit the axial movement of elastic means 72. In detail, nut 73 prevents elastic means 72 from sliding out of hole 56a in the direction oriented from brake disc 7 to brake disc 8.

In further detail, proceeding parallel to rotational axis A from the axial end of pin 71 that is engaged into hole 53a towards the axial end of pin 71 that is engaged into hole 56a, pin 71 comprises:
- a first longitudinal stretch, which is threaded and screwed to the thread of hole 53a;
- a second longitudinal stretch, which is adapted to abut elastic means 72 in at least some operational conditions of clearance recovery device 70; the extension of the cross-section of the second longitudinal stretch is greater than the extension of the cross-section of the first longitudinal stretch and the extension of the cross-section of elastic means 72 in a plane perpendicular to rotational axis A; and
- a third longitudinal stretch, which is not threaded and which engages hole 56a.

In detail, elastic means 72 are arranged about the third longitudinal stretch.

Pin 71 preferably comprises also a fourth longitudinal stretch, which is threaded and which protrudes outside hole 56a on the side opposite to piston 53. Nut 73 is screwed to pin 71 at the fourth longitudinal stretch.

In detail, between the elastic bushing of elastic means 72 and the inner surface of hole 56a there is a friction coefficient that allows the elastic bushing to slide relative to hole 56a only when the axial force applied to piston 53 is higher than the friction force acting between the elastic bushing and the inner surface of hole 56a. In addition, hydraulic system 90 is adapted to exert forces on piston 53 that are greater when piston 53 is to be moved from the second configuration to the first configuration than when piston 53 is to be moved from the first configuration to the second configuration.

When the braking action is commanded, piston 53 is moved toward the first configuration and the elastic bushing tends to slide relative to hole 56a toward brake disc 8 and integrally with pin 71.

When the braking action is stopped again, piston 53 is moved toward the second configuration and the elastic bushing tends to remain stationary with respect to hole 56a (i.e., it tends not to slide with respect to hole 56a). As a result, the second longitudinal stretch of pin 71 abuts the elastic bushing and the movement of piston 53 away from brake disc 8 is stopped.

This is especially advantageous when the surfaces of brake discs 7, 8 are worn. In fact, in such a situation the stroke of piston 53 from the second configuration to the first configuration should become gradually larger to compensate for the wear of brake discs 7, 8. However, since the elastic bushing tends to remain offset toward brake disc 8 at the end of each activation of piston 53, and since the travel of piston 53 away from brake disc 8 is stopped by the elastic bushing, piston 53 in the second configuration does not return to the axial position it would have reached when the surfaces of brake discs 7, 8 were new and unworn, but remains offset towards brake disc 8. This ensures that the stroke of piston 53 between the second configuration and the first configuration remains the same or essentially the same over time even when the brake disc surfaces 7 and 8 are worn.

The fact that the elastic bushing slides with respect to hole 56a when piston 53 moves toward brake disc 8 and does not slide with respect to hole 56a when piston 53 moves away from brake disc 8 is due to the forces with which piston 53 is moved with respect to brake disc 8. In detail, when piston 53 moves toward brake disc 8 the forces involved are greater than those acting on piston 53 when it moves away from brake disc 8. In more detail, when piston 53 moves toward brake disc 8 the forces acting on piston 53 are greater than the (maximum) frictional forces acting between the elastic bushing and the inner surfaces of hole 56a. In contrast, when piston 53 moves away from brake disc 8 the forces acting on piston 53 are lower than the frictional forces acting between the elastic bushing and the inner surfaces of hole 56a.

Preferably, braking assembly 10 also comprises at least one anti-rotational device 42 of piston 53, which is adapted to prevent the rotation of piston 53 about rotational axis A relative to main body 2. In detail, anti-rotational device 42 comprises a pin, which is fixed to both piston 53 and support element 56. In further detail, the pin is in part engaged in a corresponding hole of piston 53 and in part engaged in a corresponding hole of support element 56.

In the embodiment shown, braking assembly 10 comprises three anti-rotational devices 42, which are spaced from one another by 120° circumferentially with respect to rotational axis A.

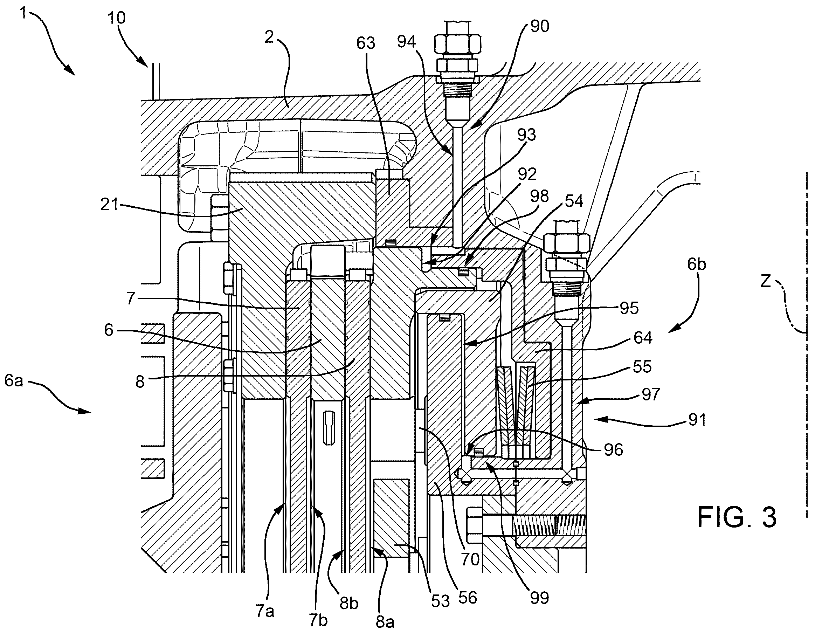

Figure 3 shows hydraulic systems 90 and 91 in part and how hydraulic fluid is fed in to actuate pistons 53 and 54.

In detail, piston 53 and body 63 define a cavity 92, which is adapted to receive the hydraulic fluid for the actuation of piston 53 and hydraulic system 90 comprises an opening 93 at cavity 92.

In further detail, hydraulic system 90 comprises a plurality of ducts 94 for the hydraulic fluid and comprising opening 93. In the embodiment shown, ducts 94 are at least partially integrated into main body 2 and body 63.

Furthermore, piston 54 and support element 56 define a cavity 95, which is adapted to receive the hydraulic fluid for the actuation of piston 54 and hydraulic system 91 comprises an opening 96 at cavity 95.

In further detail, hydraulic system 91 comprises a plurality of ducts 97 for the hydraulic fluid and comprising opening 96. In the embodiment shown, ducts 97 are at least partially integrated into main body 2 and support element 56.

For the sake of conciseness, hydraulic system 91 is arranged as in patent application EP3760503 in the name of the same Applicant.

Furthermore, braking assembly 10 comprises sealing means 98, which are adapted to seal cavity 92 and to prevent the hydraulic fluid released from opening 93 from escaping from cavity 92. In detail, sealing means 98 are interposed between piston 53 and body 63.

Braking assembly 10 also comprises sealing means 99, which are adapted to seal cavity 95 and to prevent the hydraulic fluid released from opening 96 from escaping from cavity 95. In detail, sealing means 99 are interposed between piston 54 and support element 56.

Braking assembly 10 preferably comprises an oil sump - not shown - that is adapted to collect a lubricating fluid fallen by gravity after it has lubricated intermediate disc 6 and/or brake discs 7, 8. In addition, intermediate disc 6 and brake discs 7, 8 are partially immersed in the lubricating fluid collected by the sump.

The operation of the braking assembly 10 described as above is the following.

In use, elastic means 55 constantly exert the spring force on piston 54, which is biased towards disc brake 8 and hydraulic system 91 counteracts the spring force by means of the hydraulic fluid into cavity 95. In detail, the hydraulic fluid flows through ducts 97, passes through opening 96 and causes piston 54 to move away from support element 56. In further detail, piston 54 slides with respect to support element 56 in a direction opposite to brake disc 8 (i.e., towards the right according to the arrangement shown in Figure 3) .

When the driver of work vehicle 1 commands a braking action by means of the pedal, piston 53 is actuated by hydraulic system 90 and pushes brake discs 7, 8 and intermediate disc 6 against reaction support 21. In detail, the hydraulic fluid flows through ducts 94, passes through opening 93 and causes piston 53 to move towards brake disc 8 (i.e., towards the left according to the arrangement shown in Figure 3).

When the driver commands the SAHR brake to exert its braking action, the hydraulic system 91 ceases to fully counteract the action of elastic means 55, thus allowing piston 54 to slide toward piston 53. Piston 54 then pushes against piston 53, which in turn pushes brake discs 7, 8 and intermediate disc 6 against reaction support 21.

Furthermore, since brake discs 7, 8 are partially immersed in the fluid collected in the lowermost part of cavity, such fluid is splashed over brake discs 7, 8 as a result of the rotation thereof about rotational axis A.

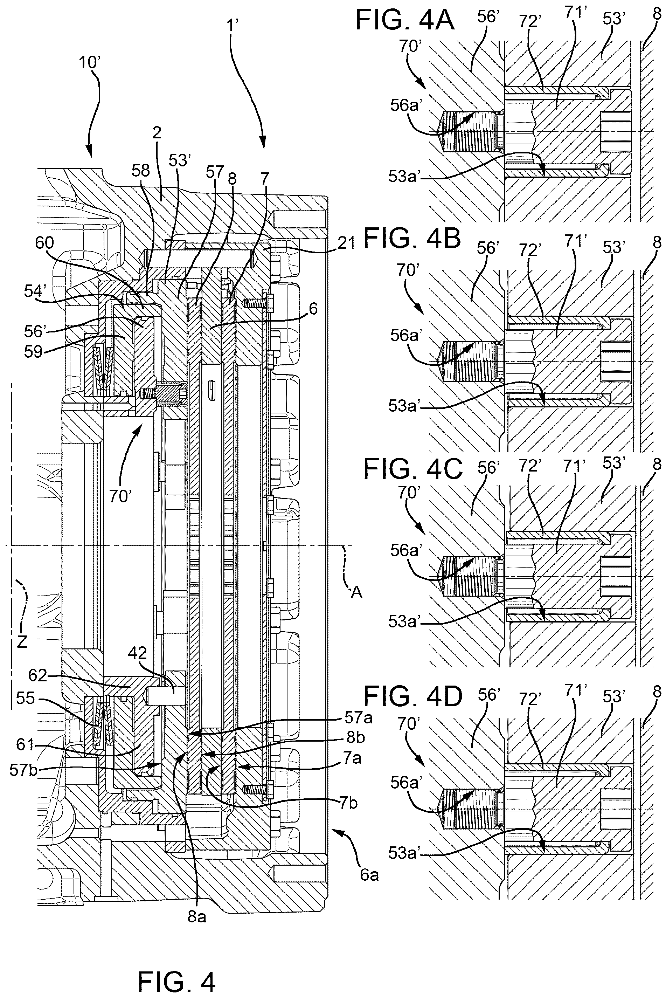

With reference to Figures 4, 4A, 4B, 4C and 4D, 1' denotes a work vehicle comprising a braking assembly 10' according to a second embodiment of the present invention. Work vehicle 1' and braking assembly 10' are respectively similar to work vehicle 1 and braking assembly 10 and will be described hereinafter only insofar as they differ from the latter; equal or equivalent parts of work vehicles 1; 1' and braking assemblies 10; 10' and will be marked, where possible, by the same reference numerals.

Work vehicle 1' differs from work vehicle 1 in that it comprises braking assembly 10' instead of braking assembly 10. Braking assembly 10' differs from braking assembly 10 in that it comprises clearance recovery devices 70' instead of clearance recovery devices 70.

In the following of the present description, only one clearance recovery device 70' will be described, being all clearance recovery devices 70' identical to one another.

Analogously to clearance recovery devices 70, clearance recovery devices 70' is adapted to limit the stroke of brake piston 53' from the second configuration to the first configuration parallel to rotational axis A.

Clearance recovery device 70' comprises:
- a pin 71', which is integral with support element 56' and slidably engaged in a hole 53a'; and
- elastic means 72', which are adapted to cooperate with both pin 71' and hole 53a'.

In detail, elastic means 72' comprise an elastic bushing, which is at least partially arranged within hole 53a'. In further detail, each elastic bushing is arranged in the room radially interposed between pin 71' and the surface of hole 53a' and is in contact with the surface of hole 53a'. More specifically, the surface of hole 53a' exerts a frictional force on the elastic bushing.

In further detail, proceeding parallel to rotational axis A from the axial end of pin 71' that is engaged into hole 56a' towards the axial end of pin 71' that is engaged into hole 53a', pin 71 comprises:
- a first longitudinal stretch, which is threaded and screwed to the thread of hole 56a';
- a second longitudinal stretch, which is adapted to abut the surface of support element 56' facing piston 53' (in at least some operational conditions of clearance recovery device 70'); the extension of the cross-section of the second longitudinal stretch is greater than the extension of the cross-section of the first longitudinal stretch in a plane perpendicular to rotational axis A. The second longitudinal stretch engages at least in part hole 53a'; and
- a third longitudinal stretch, which is at least partially arranged within hole 53a'; the extension of the cross-section of the third longitudinal stretch is greater than the extension of the cross-section of the second longitudinal stretch in a plane perpendicular to rotational axis A.

In particular, a portion of pin 71' and of the elastic bushing may extend in part outside of both holes 56a' and 53a'.

In addition, elastic means 72' are adapted to cooperate with both support element 56' and pin 71'. In detail, the elastic bushing of elastic means 72' is adapted to abut the surface of support element 56' facing piston 53' and/or the third longitudinal stretch in at least some operational condition of clearance recovery device 70'.

In detail, between the elastic bushing of elastic means 72' and the inner surface of hole 53a' there is a friction coefficient that allows the elastic bushing to slide relative to hole 53a' only when the axial force applied to piston 53' is higher than the friction force acting between elastic means 72' and the inner surface of hole 53a'. In addition, hydraulic system 90' is adapted to exert forces on piston 53' that are greater when piston 53' is to be moved from the second configuration to the first configuration than when piston 53' is to be moved from the first configuration to the second configuration.

Figures 4A, 4B, 4C and 4D show respective different operational conditions of clearance recovery device 70'.

In detail, Figure 4A shows clearance recovery device 70' in a first operational condition, in which brake piston 53' is released (i.e., disengaged; it does not exert a braking force on brake disc 8), the elastic bushing is axially distanced from the third longitudinal stretch and abuts support element 56'. In addition, brake piston 53' abuts support element 56'. In further detail, during the release of brake piston 53', brake piston 53' and the elastic bushing are moved away from brake disc 8 substantially by the same amount parallel to longitudinal axis A. In other words, during the release of brake piston 53', there is no relative motion between brake piston 53' and the elastic bushing.

Figure 4B shows clearance recovery device 70' in a second operational condition, in which brake piston 53' is moved from the second configuration towards the first configuration. During the movement of brake piston 53', the elastic bushing abuts the third longitudinal stretch and is distanced from support element 56' parallel to longitudinal axis A. In further detail, during the engagement of brake piston 53', brake piston 53' and the elastic bushing are moved towards brake disc 8 substantially by the same amount parallel to longitudinal axis A.

Figure 4C shows clearance recovery device 70' in a third operational condition, in which brake piston 53' is in contact with brake disc 8 and the surfaces of brake disc 7 and/or 8 have a higher level of wear than in the first or second operating condition. In detail, during the engagement of brake piston 53', brake piston 53' and the elastic bushing are moved towards brake disc 8 parallel to longitudinal axis A. However, in view of the higher level of wear of brake disc 7 and/or 8 and the corresponding lower thickness of brake disc 7 and/or 8 parallel to rotational axis A, the stroke of brake piston 53' would be greater than the stroke of brake piston 53' in the first or second operational condition. In further detail, during the movement of brake piston 53' toward brake disc 8, the elastic bushing abuts third longitudinal stretch and brake piston 53' slides relative to the elastic bushing towards brake disc 8.

Figure 4D shows clearance recovery device 70' in a fourth operational condition following the third operational condition, in which brake piston 53' is released (the surfaces of brake disc 7 and/or 8 have the same level of wear as in the third operational condition). During the movement of brake piston 53' from the first configuration toward the second configuration, brake piston 53' and the elastic bushing are moved away from brake disc 8 parallel to longitudinal axis A. Since during the release of brake piston 53' the friction forces acting between elastic means 72' and the inner surface of hole 53a' are greater than the forces exerted by hydraulic system 90' on piston 53', substantially no relative movement between brake piston 53' and the elastic bushing is possible. As a result, at the end of the release of brake piston 53', brake piston 53' is shifted toward brake disc 8. Accordingly, clearance recovery device 70' allows to recover the clearance due to the wear of brake disc 7 and/or 8.

Preferably, in the first and second operational conditions, brake disc 7 and/or 8 and clearance recovery device 70' are not worn or have minimal wear. For example, brake disc 7 and/or 8 and free space recovery device 70' are new and newly installed on work vehicle 1'.

The operation of braking assembly 10' is similar to the operation of braking assembly 10 and will not be described in detail, as it would be clear to a person skilled in the art in view of the description of the operation of braking assembly 10 and of Figures 4A, 4B, 4C and 4D.

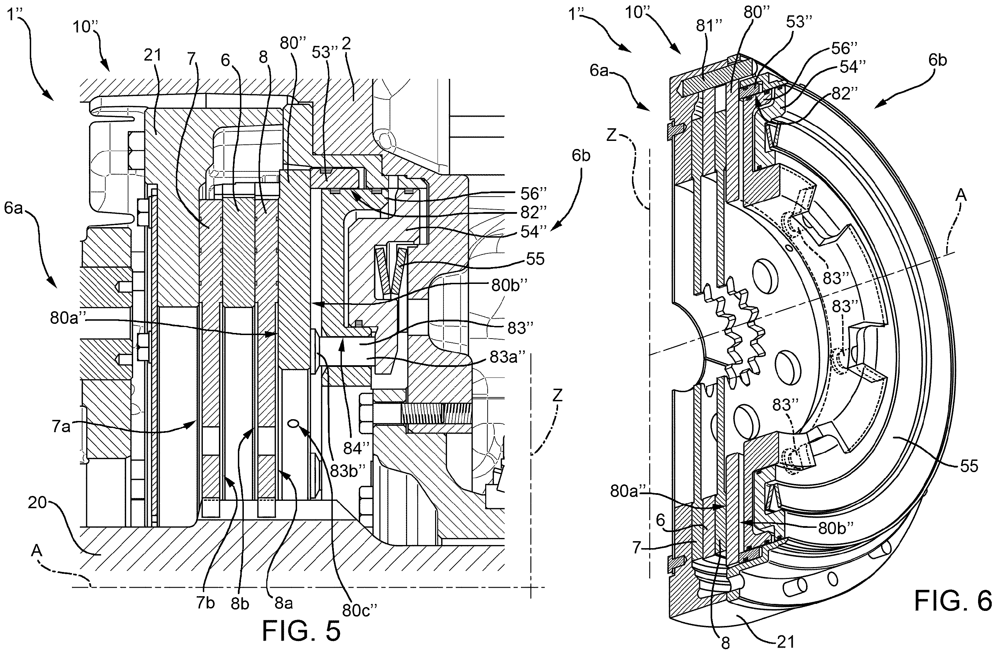

With reference to Figures 5 and 6, 1'' denotes a work vehicle comprising a braking assembly 10'' according to a third embodiment of the present invention. Work vehicle 1" and braking assembly 10'' are respectively similar to work vehicle 1 and braking assembly 10 and will be described hereinafter only insofar as they differ from the latter; equal or equivalent parts of work vehicles 1; 1" and braking assemblies 10; 10" and will be marked, where possible, by the same reference numerals.

Work vehicle 1" differs from work vehicle 1 in that it comprises braking assembly 10'' instead of braking assembly 10. Braking assembly 10'' differs from braking assembly 10 in that piston 53'' is arranged radially externally to piston 54'' with respect to rotational axis A and piston 54'' is adapted to cooperate with brake disc 8 without the interposition of piston 53''.

Braking assembly 10" also comprises an intermediate plate 80", which is adapted to directly (i.e., without the interposition of further elements) contact brake disc 8. Intermediate plate 80'' is interposed between brake disc 8 and piston 53'' and/or piston 54" along rotational axis A.

Piston 53'' is adapted to cooperate with brake disc 8 through intermediate plate 80" and piston 54" is adapted to cooperate with brake disc 8 through intermediate plate 80".

Preferably, piston 53" is adapted to directly contact intermediate plate 80''; nevertheless, one or more elements might be interposed between piston 53" and intermediate plate 80".

As shown in Figures 5 and 6, intermediate plate 80" comprises an annular body comprising a face 80a'' facing brake disc 8 and a face 80b" facing pistons 53" and 54''. In detail, faces 80a' ' and 80b' ' are planar and orthogonal to rotational axis A.

Intermediate plate 80" is rotationally fixed with respect to rotational axis A, but it is slidable parallel to rotational axis A. In detail, braking assembly 10'' comprises at least one anti-rotational device 81" of intermediate plate 80'', which is adapted to prevent the rotation of intermediate plate 80" about rotational axis A relative to main body 2. In detail, anti-rotational device 81" comprises a pin, which is in part engaged in a corresponding hole of piston intermediate plate 80" and in part engaged in a corresponding hole of main body 2.

Preferably, the pin of anti-rotational device 81" is also adapted to hold intermediate disc 6 against rotation. In particular, an intermediate portion of the pin also passes through intermediate disc 6.

Preferably, intermediate plate 80'' comprises a plurality of holes 80c" ' - only one of which is shown in Figure 5 - which are adapted to be crossed by the lubricating fluid. In detail, holes 80c" are arranged radially from a radially innermost surface of intermediate plate 80" towards a radially outermost surface of intermediate plate 80".

Piston 53" comprises an annular body defining an opening 82'', which is cylindrical and concentrical to rotational axis A. Support element 56" is radially arranged within opening 82" and the inner surfaces of opening 82" is adapted to slidably contact support element 56".

Furthermore, preferably but not necessarily, the radially outermost surface of support element 56" is aligned to the radially outermost surface of piston 54'' radially with respect to rotational axis A. In addition, piston 54'' is only in part arranged within opening 82''.

Braking assembly 10" also comprises a plurality of pushing elements 83''- six in the embodiment shown - which are carried by piston 54'' and are adapted to directly contact intermediate plate 80".

Pushing elements 83'' extend from piston 54" on the side of piston 54" facing intermediate plate 80" and are adapted to slide relative to support element 56'' integrally with piston 54" .

In detail, support element 56" comprises a plurality of holes 84", which are each slidably engaged by a respective pushing element 83". In further detail, holes 84" are through holes, are cylindrical in shape and directed parallel to rotational axis A.

In further detail, each pushing element 83'' comprises a columnar body 83a'', which is parallel to rotational axis A, and a contacting element 83b'', which is opposite to piston 54'' with respect to columnar body 83a''. Columnar body 53a'' is engaged within the respective hole 84''; contacting element 83b" is arranged outside the respective hole 84" and is adapted to contact face 80b".

The operation of braking assembly 10'' is similar to the operation of braking assembly 10 and will be described only insofar as it differs therefrom.

In detail, the operation of braking assembly 10" differs from the operation of braking assembly 10 in that piston 53" interacts with brake disc 8 by pushing intermediate plate 80 and that piston 54" interacts with brake disc 8 by thrusting pushing elements 83" against intermediate plate 80. In further detail, when piston 54" interacts with brake disc 8, it is not necessary for piston 53'' to be in contact with intermediate plate 80.

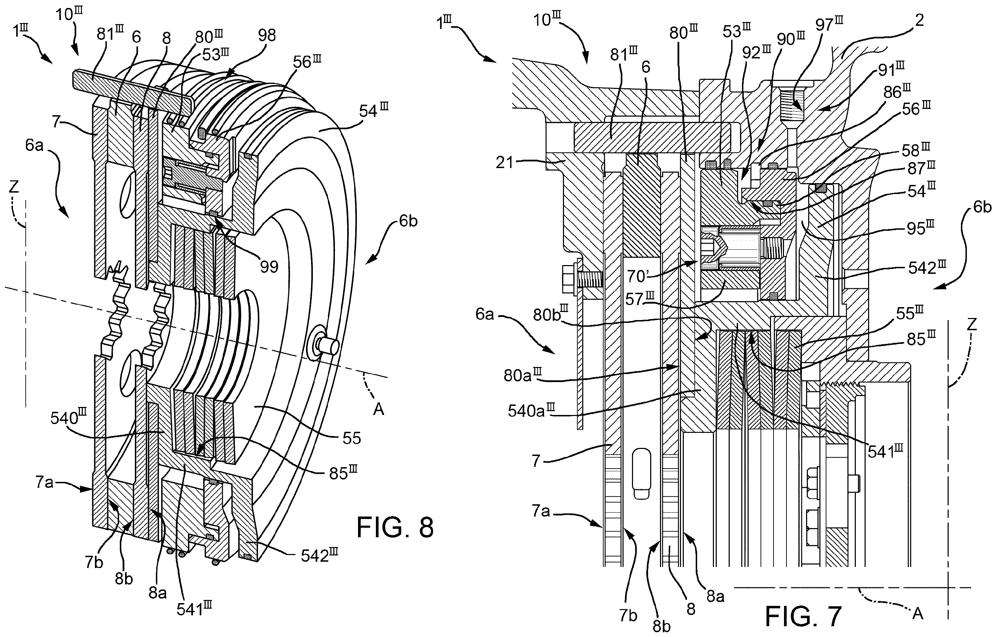

With reference to Figures 7 and 8, 1^{III} denotes a work vehicle comprising a braking assembly 10^{III} according to a fourth embodiment of the present invention. Work vehicle 1^{III} and braking assembly 10^{III} are respectively similar to work vehicle 1" and braking assembly 10" and will be described hereinafter only insofar as they differ from the latter; equal or equivalent parts of work vehicles 1"; 1^{III} and braking assemblies 10"; 10^{III} and will be marked, where possible, by the same reference numerals.

Work vehicle 1^{III} differs from work vehicle 1" in that it comprises braking assembly 10^{III} instead of braking assembly 10". Braking assembly 10^{III} differs from braking assembly 10'' in that spring 55^{III} is arranged radially internally relative to piston 53^{III} and support element 56^{III} with respect to rotational axis A. Preferably, spring 55^{III} is arranged completely radially internally relative to piston 53^{III} and support element 56^{III}.

In detail, piston 54^{III} comprises a seat 85^{III} on the side opposite to intermediate plate 80^{III}, which is adapted to house at least in part spring 55^{III}. Seat 85^{III} is defined completely radially internally relative to piston 53^{III} and support element 56^{III}.

Furthermore, piston 54^{III} is adapted to directly cooperate with and/or contact intermediate plate 80^{III}. In detail, piston 54^{III} is adapted to directly cooperate with and/or contact intermediate plate 80^{III} without the interposition of piston 53^{III} or pushing elements 83". In further detail, proceeding parallel to rotational axis A in the direction oriented from brake disc 7 to brake disc 8, piston 54^{III} comprises:
- a stretch 540^{III}, which is directed orthogonally to rotational axis A and adapted to abut face 80b^{III} ;
- a stretch 541^{III}, which is directed parallel to rotational axis A and which defines seat 85^{III}; and
- a stretch 542^{III}, which is directed orthogonally to rotational axis A and opposite to piston 53^{III} with respect to support element 56^{III}. In detail, stretch 542^{III} is spaced apart from support element 56^{III} parallel to rotational axis A.

Support element 56^{III} abuts main body 2 on the side opposite to brake disc 8. In addition, braking assembly 10^{III} comprises an axial stop device 86^{III}, which is fixed to main body 2 and is adapted to cooperate with support element 56^{III} on the side of brake disc 8. In detail, axial stop device 86^{III} is adapted to prevent support element 56^{III} from sliding parallel to rotational axis A towards brake disc 8. Preferably, axial stop device 86^{III} is a snap ring. Cavity 92^{III}, which is adapted to receive the hydraulic fluid for the actuation of piston 53^{III}, is defined by piston 53^{III} and support element 56^{III}. In detail, cavity 92^{III} is also partly delimited by axial stop device 86^{III}.

Piston 53^{III} comprises an annular shaped body 57^{III} and a protrusion 58^{III} extending from annular shaped body 57^{III} parallel to rotational axis A. Protrusion 58^{III} extends from annular shaped body 57^{III} on the side opposite to brake disc 8 and preferably over the entire circumference of annular shaped body 57^{III}. In addition, support element 56^{III} comprises a seat 87^{III}, which is engaged at least in part by protrusion 58^{III}.

In addition, spring 55^{III} is arranged radially internally relative to cavity 92^{III} and cavity 95^{III} with respect to rotational axis A.

The operation of braking assembly 10^{III} is similar to the operation of braking assembly 10'' and will be described only insofar as it differs therefrom.

In detail, the operation of braking assembly 10^{III} differs from the operation of braking assembly 10" in that piston 54^{III} interacts with brake disc 8 by directly cooperating with intermediate plate 80^{III}. In addition, spring 55^{III} exerts its elastic force onto piston 54^{III} radially internally with respect to piston 53^{III} and support element 56^{III}.

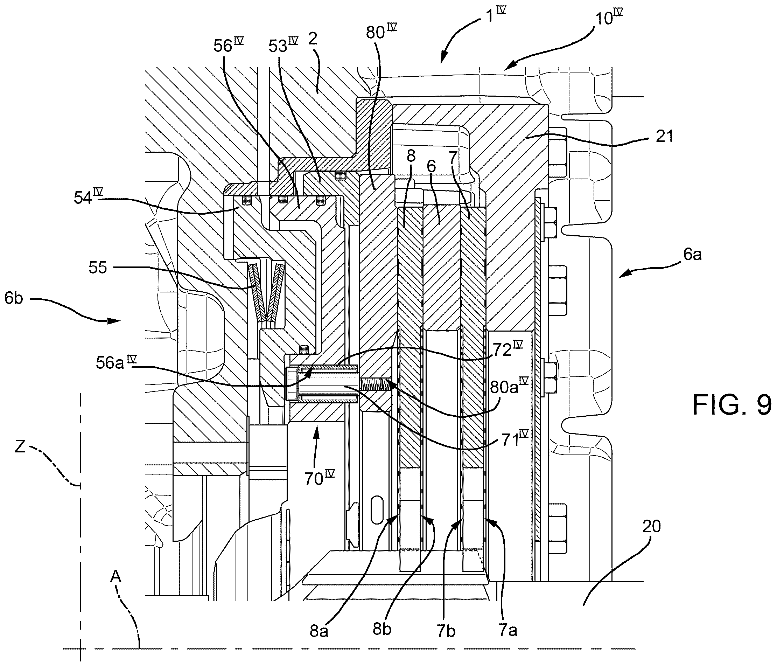

With reference to Figure 9, 1 IV denotes a work vehicle comprising a braking assembly 10^{IV} according to a fifth embodiment of the present invention. Work vehicle 1 IV and braking assembly 10^{IV} are respectively similar to work vehicle 1" and braking assembly 10" and will be described hereinafter only insofar as they differ from the latter; equal or equivalent parts of work vehicles 1' ' ; 1^{IV} and braking assemblies 10''; 10^{IV} and will be marked, where possible, by the same reference numerals.

Work vehicle 1^{IV} differs from work vehicle 1" in that it comprises braking assembly 10^{IV} instead of braking assembly 10". Braking assembly 10^{IV} differs from braking assembly 10'' in that it comprises a clearance recovery device 70^{IV} instead of clearance recovery devices 70 or 70'.

In the following of the present description, only one clearance recovery device 70^{IV} will be described, being all clearance recovery devices 70^{IV} identical to one another.

Clearance recovery device 70^{IV} comprises:
- a pin 71^{IV}, which is integral with intermediate plate 80^{IV} and slidably engaged in a hole 56a^{IV} of support element 56^{IV};
- elastic means 72^{IV}, which are adapted to cooperate with both pin 71^{IV} and hole 56a^{IV}.

Elastic means 72^{IV} are adapted to draw intermediate plate 80^{IV} back towards support element 56^{IV} at the end of the actuation of the piston 53^{IV}.

In detail, elastic means 72^{IV} comprise an elastic bushing, which is partially arranged within hole 56a^{IV}. In further detail, each elastic bushing is arranged in the room radially interposed between pin 71^{IV} and the surface of hole 56a^{IV} and is in contact with the surface of hole 56a^{IV}. More specifically, the surface of hole 56a^{IV} exerts a frictional force on the elastic bushing.

In further detail, between the elastic bushing of elastic means 72^{IV} and inner surface of hole 56a^{IV} there is a friction coefficient that allows them to slide reciprocally only when the axial force applied to intermediate plate 80^{IV} is higher than the friction force acting between the elastic bushing and inner surface of hole 56a^{IV}. In addition, hydraulic system 90^{IV} is adapted to exert forces on intermediate plate 80^{IV} (through piston 53^{IV}) that are greater when intermediate plate 80^{IV} is to be moved towards brake disc 8 than when intermediate plate 80^{IV} is to be moved away from brake disc 8.

In further detail, proceeding parallel to rotational axis A from the axial end of pin 71^{IV} that is engaged into hole 56a^{IV} towards the axial end of pin 71^{IV} that is engaged into a hole 80a^{IV} of intermediate plate 80^{IV}, pin 71^{IV} comprises:
- a first longitudinal stretch, which is partially arranged into hole 56a^{IV};
- a second longitudinal stretch, which is adapted to abut the surface of intermediate plate 80^{IV} facing piston 53^{IV} (in at least some operational conditions of clearance recovery device 70^{IV}); the extension of the cross-section of the second longitudinal stretch is smaller than the extension of the cross-section of the first longitudinal stretch in a plane perpendicular to rotational axis A. The second longitudinal stretch engages in part hole 56a^{IV}; and
- a third longitudinal stretch, which is arranged within hole 80a^{IV}; the extension of the cross-section of the third longitudinal stretch is smaller than the extension of the cross-section of the second longitudinal stretch in a plane perpendicular to rotational axis A.

In detail, hole 80a^{IV} is a through cylindrical hole directed parallel to rotational axis A and is at least in part threaded. The third longitudinal stretch is threaded and meshes with the thread of hole 80a^{IV}.

In particular, a portion of pin 71^{IV} and of the elastic bushing extends in part outside of both holes 56a^{IV} and 80a^{IV}.

In addition, elastic means 72^{IV} are adapted to cooperate with both support element 56^{IV} and pin 71^{IV}. In detail, the elastic bushing is adapted to abut intermediate plate 80^{IV} and/or the first longitudinal stretch (in at least some operational conditions of clearance recovery device 70^{IV}).

Furthermore, piston 53^{IV} - similarly to piston 53''-comprises an annular body arranged coaxially to rotational axis A. Differently from piston 53'', piston 53^{IV} further comprises a protrusion extending radially inwardly with respect to rotational axis A. In detail, the protrusion is arranged at the axial end of piston 53^{IV} facing intermediate plate 80^{IV}.

Preferably but not necessarily, support element 56^{IV} comprises a notch at the axial end facing piston 53^{IV}. In detail, in a plane passing through rotational axis A, the notch has a shape corresponding to the shape of the protrusion of piston 53^{IV}.

Furthermore, intermediate plate 80^{IV} differs from intermediate plate 80" in that the thickness thereof parallel to rotational axis A is not constant. In detail, the thickness of intermediate plate 80^{IV} at the radially innermost end thereof is the minimum thickness of intermediate plate 80^{IV} parallel to rotational axis A. In further detail, the thickness of intermediate plate 80^{IV} at holes 80a^{IV} or in proximity to holes 80a^{IV} is equal to the minimum thickness of intermediate plate 80^{IV} parallel to rotational axis A.

For the sake of clarity, piston 54^{IV} is adapted to cooperate with intermediate plate 80^{IV} through pushing elements analogous to pushing elements 83".

The operation of braking assembly 10^{IV} is similar to the operation of braking assembly 10'' and will not be described in detail, as it would be clear to a person skilled in the art in view of the description of the operation of braking assembly 10".

In view of the foregoing, the advantages of braking assembly 10; 10'; 10"; 10^{III}; 10^{IV} and work vehicle 1; 1'; 1"; 1^{III}; 1^{IV} according to the invention are apparent.

In particular, since braking assembly 10; 10'; 10"; 10^{III}; 10^{IV} comprises both service brake piston 53; 53'; 53"; 53^{III}; 53^{IV} and SAHR brake piston 54; 54'; 54"; 54^{III}; 54^{IV} and that both pistons 53; 53'; 53"; 53^{III}; 53^{IV}, 54; 54'; 54"; 54^{III}; 54^{IV} are adapted to cooperate with brake disc 8, the volume occupied by components used for vehicle braking is significantly reduced. Such a solution is significantly more compact than the known solutions discussed in the introductory part of the present description and provides greater design freedom for the vehicle. In detail, the space gained from the rearrangement of the SAHR brake and service brake can be advantageously used to mount additional components on board.

Moreover, since the braking assembly 10; 10'; 10"; 10^{III}; 10^{IV} comprises clearance recovery device 70; 70', 70^{IV}, the clearance inevitably caused by wear can be advantageously and automatically recovered and repeatability of use of braking assembly 10; 10'; 10"; 10^{III}; 10^{IV} is ensured. In detail, since clearance recovery device 70; 70'; 70^{IV} is arranged at support element 56; 56'; 56"; 56^{III}; 56^{IV}, in the event that the clearance recovery device 70; 70'; 70^{IV} surfaces are worn or damaged, the clearance recovery device 70; 70'; 70^{IV} can be restored easily by replacing support element 56; 56'; 56"; 56^{III}; 56^{IV}, without requiring replacement or rework of complex parts of braking assembly 10; 10'; 10"; 10^{III}; 10^{IV} such as main body 2.

The embodiment wherein piston 53; 53' directly contacts brake disc 8 and piston 54; 54' cooperates with brake disc 8 through piston 53; 53' is particularly compact and requires minimum modifications of piston 53; 53' of existing disc brakes.

The embodiment wherein piston 53"; 53^{III}; 53^{IV} is arranged radially externally to piston 54"; 54^{III}; 54^{IV} and piston 54"; 54^{III}; 54^{IV} is adapted to cooperate with brake disc 8 without the interposition of piston 53''; 53^{III}; 53^{IV} allows piston 54''; 54^{III}; 54^{IV} to be independent of piston 53''; 53^{III}; 53^{IV}. Moreover, the arrangement of piston 54''; 54^{III}; 54^{IV} is characterized by an advantageously large area over which the hydraulic oil can act to actuate piston 54"; 54^{III}; 54^{IV}.

Since spring 55^{III} is arranged radially internally relative to piston 53^{III} and support element 56^{III} with respect to rotational axis A, spring 55^{III} is spaced away from hydraulic systems 90 and 91.

It is clear that modifications can be made to the described braking assembly 10; 10'; 10''; 10^{III}; 10^{IV} and work vehicle 1; 1'; 1"; 1^{III}; 1^{IV} which do not extend beyond the scope of protection defined by the claims.

In particular, work vehicle 1; 1'; 1"; 1^{III}; 1^{IV} might comprise only one braking assembly 10; 10'; 10''; 10^{III}; 10^{IV}.

Work vehicle 1; 1'; 1"; 1^{III}; 1^{IV} might comprise one or more braking assemblies 10; 10'; 10''; 10^{III}; 10^{IV} adapted to brake one or both front wheels.

Braking assembly 10; 10'; 10"; 10^{III}; 10^{IV} might comprise only one brake disc 7, 8 or more than two brake discs 7, 8.

Piston 53; 53'; 53"; 53^{III}; 53^{IV} and/or piston 54; 54'; 54"; 54^{III}; 54^{IV} may be adapted to cooperate with brake disc 7.

Braking assembly 10 might comprise only one clearance recovery devices 70, two clearance recovery devices 70 or more than three clearance recovery devices 70. Braking assembly 10'; 10"; 10^{III} might comprise only one clearance recovery devices 70', two clearance recovery devices 70' or more than three clearance recovery devices 70'. Braking assembly 10^{IV} might comprise only one clearance recovery devices 70^{IV}, two clearance recovery devices 70^{IV} or more than three clearance recovery devices 70^{IV}. Braking assembly 10; 10'; 10''; 10^{III}; 10^{IV} might comprise one or more clearance recovery devices 70 and/or one or more than one clearance recovery devices 70' and/or one or more than one clearance recovery devices 70^{IV}.

Braking assembly 10; 10'; 10''; 10^{III}; 10^{IV} might comprise only one anti-rotational device 42, two anti-rotational devices 42 or more than three anti-rotational devices 42.

Disc 6 might comprise a friction material at an external surface thereof and discs 7 and 8 might not comprise the friction material. In further detail, intermediate disc 6 might comprise the friction material both on first side 6a and second side 6b.

Piston 53; 53' might comprise a number of holes 53a; 53a' other than three. In detail, piston 53; 53' might comprise less than three holes 53a; 53a' (i.e., one or two) or more than three holes 53a; 53a'. Holes 53a; 53a' might be variously arranged. In addition, holes 53a; 53a' might be threaded or not.

Braking assembly 10 may also comprise a plurality of pushing elements, by way of example six in number, which are carried by piston 54 and are adapted to directly contact brake disc 8. These pushing elements extend from piston 54 on the side of piston 54 facing piston 53 and are adapted to slide relative to support element 56 integrally with piston 54. According to this not-shown embodiment, piston 53 comprises a plurality of first through holes and support element 56 comprises a plurality of second through holes, which are each aligned to a respective first through hole. Each pushing element slidably engages at the same time a respective first through hole and a respective second through hole. In detail, the first through holes and the second through holes are directed parallel to rotational axis A.
By way of example, each pushing elements comprises a columnar body, which is parallel to rotational axis A, and a contacting element, which is opposite to piston 54 with respect to the columnar body. The columnar body is engaged with the respective first and second through hole; the contacting element is arranged outside the respective first and second through holes and is adapted to contact brake disc 8. Moreover, braking assembly 10 might comprise an intermediate plate adapted to directly contact brake disc 8 and interposed between brake disc 8 and piston 53 and/or piston 54 along rotational axis A. According to this not-shown embodiment, piston 53 is adapted to cooperate with brake disc 8 through the intermediate plate and piston 54 is adapted to cooperate with brake disc 8 through the pushing elements described above and the intermediate plate. Elastic means 72 might comprise a coil spring instead of or in addition to the elastic bushing.

## Claims

1. Braking assembly (10; 10'; 10"; 10^{III}; 10^{IV}) for a work vehicle (1; 1'; 1"; 1^{III}; 1^{IV}) comprising:
- a first brake disc (8, 7), which is adapted to rotate, in use, integrally with at least one wheel of said work vehicle (1; 1'; 1"; 1^{III}; 1^{IV}) about a rotational axis (A);
- a first brake piston (53; 53'; 53"; 53^{III}; 53^{IV}), which is settable, in use, to a first configuration, in which it at least indirectly cooperates with said first brake disc (8, 7) or to a second configuration, in which it does not cooperate with said first brake disc (8, 7);
wherein said braking assembly (10; 10'; 10"; 10^{III}; 10^{IV}) further comprises:
- a second brake piston (54; 54'; 54"; 54^{III}; 54^{IV}), which is adapted to at least indirectly cooperate with said first brake disc (8, 7);
- first elastic means (55; 55^{III}), which are adapted to elastically urge, in use, said second brake piston (54; 54'; 54"; 54^{III}; 54^{IV}) to cooperate with said first brake disc (8, 7);
- a support element (56; 56'; 56‴; 56^{III}; 56^{IV}), which is fixed to a main body (2) of said work vehicle (1; 1'; 1"; 1^{III}; 1^{IV}) and which is adapted to slidably support said second brake piston (54; 54"; 54‴; 54^{III}; 54^{IV}); and
- at least one clearance recovery device (70; 70'; 70^{IV}), which is supported by said support element (56; 56'; 56"; 56^{III}; 56^{IV}) and adapted to limit the stroke of said first brake piston (53; 53'; 53''; 53^{III}; 53^{IV}) from said second configuration to said first configuration.

2. Braking assembly according to claim 1, wherein said clearance recovery device (70; 70') comprises:
- an element (71; 71'), which is connected to one of said support element (56; 56'; 56"; 56^{III}) and said first brake piston (53; 53'; 53"; 53^{III}) and slidable with respect to the other one between said support element (56; 56'; 56"; 56^{III}) and said first brake piston (53; 53'; 53"; 56^{III}); and
- second elastic means (72; 72'), which are adapted to cooperate with said element (71; 71') and said other one between said support element (56; 56'; 56"; 56^{III}) and said first brake piston (53; 53'; 53"; 56^{III}) with respect to whom said element (71; 71') is adapted to slide, in use.

3. Braking assembly according to claim 2, wherein said support element (56) comprises at least one first hole (56a);
said element (71) being integral with said first brake piston (53) and slidably engaged in said first hole (56a);
said second elastic means (72) being arranged within said first hole (56a) radially between said element (71) and the surface of said first hole (56a); said second elastic means (72) being in contact with said surface of said first hole (56a) and being adapted to abut said element (71) in at least some operational condition of said clearance recovery device (70) .

4. Braking assembly according to claim 3, wherein said first brake piston (53) comprises at least one second hole (53a), which is threaded and aligned to a respective first hole (56a); said element (71) being screwed to said second hole (53a).

5. Braking assembly according to claim 3 or 4, wherein said clearance recovery device (70) further comprises an axial constraining device (73), which is mounted onto said element (71) at an axial end of said element (71) opposite to said first brake piston (53);
said axial constraining device (73) being adapted to limit the movement of said second elastic means (72) parallel to said rotational axis (A).

6. Braking assembly according to claim 2, wherein said first brake piston (53') comprises at least one first hole (53a');
said element (71') being integral with said support element (56') and slidably engaged in a respective said first hole (53a');
said second elastic means (72') being arranged in part within said first hole (53a') radially between said element (71') and the surface of said first hole (53a'); said second elastic means (72') being in contact with said surface of said first hole (53a') and being adapted to abut said element (71') in at least some operational condition of said clearance recovery device (70').

7. Braking assembly according to claim 6, wherein said support element (56') comprises at least one second hole (56a'), which is threaded and aligned to a respective first hole (53a'); said element (71') being screwed to said second hole (56a').

8. Braking assembly according to claim 1, further comprising an intermediate plate (80^{IV}), which is slidable relative to said main body (2) and adapted to directly contact, in use, said first brake disc (8, 7);
said intermediate plate (80^{IV}) being interposed between said first brake disc (8, 7) and said first brake piston (53^{IV}) and/or said second brake piston (54^{IV}) along said rotational axis (A);
said first brake piston (53^{IV}) being adapted to cooperate with said first brake disc (8, 7) through said intermediate plate (80^{IV});
said second brake piston (54^{IV}) being adapted to cooperate with said first brake disc (8, 7) through said intermediate plate (80^{IV});
wherein said clearance recovery device (70^{IV}) comprises:
- an element (71^{IV}), which is connected to said intermediate plate (80^{IV}) and slidable with respect to said support element (56^{IV}); and
- second elastic means (72^{IV}), which are adapted to cooperate with said element (71^{IV}) and said support element (56^{IV}).

9. Braking assembly according to claim 8, wherein said support element (56^{IV}) comprises at least one first hole (56a^{IV});
said element (71^{IV}) being integral with said intermediate plate (80^{IV}) and slidably engaged in said first hole (56a^{IV});
said second elastic means (72^{IV}) being arranged within said first hole (56a^{IV}) radially between said element (71^{IV}) and the surface of said first hole (56a^{IV}); said second elastic means (72^{IV}) being in contact with said surface of said first hole (56a^{IV}) and being adapted to abut said element (71^{IV}) in at least some operational condition of said clearance recovery device (70^{IV}).

10. Braking assembly according to claim 9, wherein said intermediate plate (80^{IV}) comprises at least one second hole (80a^{IV}), which is threaded and aligned to a respective first hole (56a^{IV}); said element (71^{IV}) being screwed to said second hole (80a^{IV}).

11. Braking assembly according to any one of the foregoing claims, further comprising:
- a second brake disc (7, 8), which is adapted to rotate, in use, integrally with said wheel of said work vehicle (1; 1'; 1"; 1^{III}; 1^{IV}) about said rotational axis (A); said second brake disc (7, 8) being spaced from said first brake disc (8, 7) parallel to said rotational axis (A);
- an intermediate disc (6), which is rotationally fixed relative to a main body (2) of said work vehicle (1; 1'; 1"; 1^{III}; 1^{IV}) and which is interposed between said first brake disc (8, 7) and said second brake disc (7, 8) parallel to said rotational axis (A).

12. Braking assembly according to any one of claims 1 to 7, wherein said first brake piston (53; 53') is adapted to directly contact, in use, said first brake disc (8, 7);
said second brake piston (54; 54') being opposed to said first brake disc (8, 7) with respect to said first brake piston (53; 53') along said rotational axis (A);
said second brake piston (54; 54') being adapted to cooperate, in use, with said first brake disc (8, 7) through said first brake piston (53; 53').

13. Braking assembly according to any one of claims 1 to 11, wherein said first brake piston (53"; 53^{III}; 53^{IV}) is arranged at least in part radially externally to said second brake piston (54"; 54^{III}; 54^{IV}) with respect to said rotational axis (A) and said second brake piston (54''; 54^{III}; 54^{IV}) is adapted to cooperate with said first brake disc (8, 7) without the interposition of said first brake piston (53''; 53^{III}; 53^{IV}).

14. A work vehicle (1; 1'; 1"; 1^{III}; 1^{IV}) comprising:
- a main body (2);
- a plurality of wheels, which are adapted to move, in use, said main body (2) with respect to the ground; and
- at least one braking assembly (10; 10'; 10"; 10^{III}; 10^{IV}) according to any one of the foregoing claims, which is adapted to brake, in use, one or more of said plurality of wheels.

15. Work vehicle according to claim 14 comprising:
- a first hydraulic system (90; 90'; 90''; 90^{III}, 90^{IV}), which is adapted to actuate said first brake piston (53; 53'; 53"; 53^{III}; 53^{IV}); and
- a second hydraulic system (91), which is adapted to counteract, in use, the elastic force exerted by said first elastic means (55; 55^{III}) on said second brake piston (54; 54'; 54"; 54^{III}; 54^{IV}).

16. Working vehicle according to claim 15, wherein said first hydraulic system (90; 90'; 90"; 90^{III}, 90^{IV}), is adapted to exert, in use, on said first brake piston (53; 53'; 53"; 53^{III}; 53^{IV}):
- a first force to move, in use, said first brake piston (53; 53'; 53"; 53^{III}; 53^{IV}) from said second configuration to said first configuration;
- a second force to move, in use, said first brake piston (53; 53'; 53"; 53^{III}; 53^{IV}) from said first configuration to said second configuration;
said first force being greater in magnitude than said second force;
said first force being greater in magnitude than the maximum friction force acting, in use, between said second elastic means (72; 72'; 72^{IV}) and said first hole (56a; 53a'; 56a^{IV}) with whom they cooperate, in use;
said second force being lower in magnitude than the maximum friction force acting, in use, between said second elastic means (72; 72'; 72^{IV}) and said first hole (56a; 53a'; 56a^{IV}) with whom they cooperate, in use.
